# EUROPÄISCHE PATENTSCHRIFT

(11) **EP 2 146 059 B1**
(45) Veröffentlichungstag und Bekanntmachung des Hinweises auf die Patenterteilung: **28.08.2013**
(21) Anmeldenummer: 09165646.2
(22) Anmeldetag: 16.07.2009
(51) Int. Cl.: B01D 45/08

(54) **Verwendung eines Siebes, sowie Dampfturbinenanlage**
Use of a screen and steam turbine plant
Emploi d'un tamis et centrale à turbine à vapeur

(30) Priorität: 16.07.2008 DE 102008033401
(43) Veröffentlichungstag der Anmeldung: 20.01.2010
(73) Patentinhaber: Siemens Aktiengesellschaft, 80333 München (DE)
(72) Erfinder: Weitz, Bodo, Dr., 13589 Berlin (DE)

(56) Entgegenhaltungen:
- EP-A- 1 806 168
- GB-A- 2 203 961
- US-A- 5 190 161
- US-A1- 2002 070 031
- US-A1- 2004 112 827

## Beschreibung

Die Erfindung betrifft die Verwendung eines Siebes nach dem Oberbegriff des Anspruchs 1, sowie eine Dampfturbinenanlage.

Dampfsiebe werden beispielsweise in Dampfturbinenanlagen benötigt, um in Zudampfleitungen Fremdkörper auszusieben, die ansonsten Lauf- und Leitschaufeln beschädigen können.

In einer gängigen Ausführungsform besitzt das Dampfsieb eine hülsenartige Gestalt mit einer zylindrischen oder konischen Siebfläche, die in Radialrichtung vom Dampf durchströmbar ist. Dampfsiebe dieser Bauart sind beispielsweise in der DE 1 184 355 und der DE 1 198 833 beschrieben. Nachteilig ist bei konventionellen Dampfsieben dieser Art deren aufwendige Herstellung, und in manchen Fällen auch ein vergleichsweise groβer Strömungswiderstand.

Die Verwendung eines Siebes nach dem Oberbegriff des Anspruchs 1 ist aus der US 5,190,161 sowie der US 2004/0112827 A1 bekannt. Bei dem aus der US 5,190,161 bekannten Sieb besteht die Verwendung darin, Partikel aus verschiedenen Substanzen zu separieren. Diesbezüglich wird auch von einem zu behandelnden Fluid wie z. B. einer Flüssigkeit oder einem Gas gesprochen, welches von der Innenseite zur Außenseite des Siebes strömt. Bei dem aus der US 2004/0112827 A1 bekannten Sieb wird als Verwendung ein Sieben, Filtrieren, Fraktionieren oder Sortieren von Faserstoffsuspensionen in der Faserstoff- und Papierherstellungsindustrie erwähnt.

Es ist eine Aufgabe der vorliegenden Erfindung, für Dampfturbinenanlagen ein einfach herzustellendes Dampfsieb mit guten Gebrauchseigenschaften anzugeben.

Diese Aufgabe wird gemäß der Erfindung durch eine Verwendung nach Anspruch 1 bzw. eine Dampfturbinenanlage gemäß Anspruch 8 gelöst. Die abhängigen Ansprüche betreffen vorteilhafte Weiterbildungen der Erfindung.

Das in nachfolgend beschriebener Weise herstellbare, erfindungsgemäß als Dampfsieb verwendete Sieb umfasst einen zylindrischen oder konischen Rohrkörper mit wenigstens einer Apertur sowie wenigstens einer, in ihrem Verlauf durch die Apertur unterbrochenen Nut in einer Mantelfläche des Rohrkörpers, und ein in die Nut eingefügtes und am Rohrkörper fixiertes (ein- oder mehrstückiges) Profilmaterial.

Ein vorteilhaftes Verfahren zur Herstellung eines erfindungsgemäß als Dampfsieb zu verwendenden Siebes mit zylindrischer oder konischer Siebfläche umfasst die Schritte:
- Bereitstellung eines zylindrischen oder konischen Rohrkörpers,
- Ausbildung wenigstens einer Apertur sowie wenigstens einer, in ihrem Verlauf durch die Apertur unterbrochenen Nut in einer Mantelfläche des Rohrkörpers, und
- Einfügung eines Profilmaterials (z. B. Profildraht) in die Nut und Fixierung des Profilmaterials am Rohrkörper (z. B. mittels Verschweißung).

Gegebenenfalls kann sodann nachträglich noch ein axiales Rohrende geeignet verschlossen werden, falls das Dampfsieb mit nur einer stirnseitigen (axialen) Öffnung für den Dampfeintritt oder -austritt verwendet werden soll.

Dies ermöglicht die Fertigung von Dampfsieben mit geringen Material- und Werkzeugkosten und dennoch vorteilhaften Gebrauchseigenschaften wie insbesondere z. B. einer großen mechanischen Belastbarkeit und/oder einem niedrigen Strömungswiderstand.

Zur Bereitstellung des zylindrischen oder konischen Rohrkörpers gibt es vielfältige Möglichkeiten.

Für die meisten Anwendungen zweckmäßig ist eine Fertigung des Rohrkörpers aus einem metallischen Material wie beispielsweise Stahl. Eine Herstellung aus Stahl ist z. B. aus Festigkeitsgründen vorteilhaft. Darüber hinaus eignet sich dieses Material vorteilhaft für eine Verschweißung zwecks Fixierung des z. B. ebenfalls aus Stahl hergestellten Profilmaterials.

Der Rohrkörper kann beispielsweise nahtlos gefertigt (z. B. gezogen) sein und beispielsweise eine Wanddicke im Bereich von etwa 2 bis 6 mm aufweisen. Für viele Anwendungen günstig ist es, wenn die axiale Länge des Rohrkörpers etwa das 1-fache bis 3-fache des Rohrdurchmessers beträgt (bzw. des maximalen Durchmessers bei einem über die Rohrlänge ungleichmäβigen Durchmesser).

In einer Ausführungsform ist vorgesehen, dass die Apertur/Aperturen mit einer (z. B. in Axialrichtung des Rohrkörpers) langgestreckten Kontur ausgebildet wird/werden. Damit ist es insbesondere möglich, jede solche langgestreckte Aperturfläche vorteilhaft zur Schaffung einer Vielzahl von Sieböffnungen des fertigen Dampfsiebes zu nutzen. Hierbei kann z. B. vorgesehen sein, dass die Aperturbreite im Wesentlichen die Ausdehnung der späteren Sieböffnungen in einer Richtung definiert und die Aperturlänge durch mehrere Profilmaterialabschnitte am fertigen Dampfsieb in eine Vielzahl von Aperturflächenabschnitten unterteilt wird, welche die einzelnen Sieböffnungen am fertigen Dampfsieb darstellen.

Bevorzugt wird eine Vielzahl von Aperturen im Rohrkörpermantel ausgebildet. Nachfolgend erläuterte Ausgestaltungen der Apertur können dann insbesondere für alle vorhandenen Aperturen vorgesehen sein.

In einer Ausführungsform ist vorgesehen, dass die Apertur mehrere Nutverläufe unterbricht. Dies ermöglicht am fertigen Dampfsieb vorteilhaft eine mehrfache Überbrückung dieser Apertur durch das Profilmaterial, um mittels einer Apertur eine Vielzahl von Sieböffnungen zu schaffen.

In einer bevorzugten Weiterbildung der Erfindung besitzt die Apertur eine abgerundete Kontur, ist also z. B. rechteckig mit abgerundeten Ecken. Damit kann eine Verbesserung der strömungstechnischen Eigenschaften erzielt werden. Alternativ oder zusätzlich kommt hierfür in Betracht, den Aperturrand nicht exakt in Radialrichtung durch das Rohrkörpermaterial hindurchlaufen zu lassen, sondern den Aperturrand (im Querschnitt betrachtet) schräg und/oder abgefasst bzw. abgerundet auszubilden. Sowohl die Kontur der Apertur als auch der Rand der Apertur können somit insbesondere in strömungstechnischer Hinsicht optimiert gestaltet werden.

Insbesondere für einen Rohrkörper aus Metall (z. B. gehärteter Stahl) ist es zumeist zweckmäßig, die Apertur aus dem Rohrmaterial herauszufräsen. Bei eher dünnwandigen Rohrkörpern kommt z. B. auch ein Lasern in Betracht.

Die Ausbildung der wenigstens einen Nut in der Mantelfläche (bevorzugt radial äußere Mantelfläche) des Rohrkörpers vereinfacht in der Praxis die Anordnung des die Apertur(en) überbrückenden Profilmaterials. Außerdem verhindert die Nut ein Verrutschen des Profilmaterials am fertigen Dampfsieb. Schließlich kann die Nut vorteilhaft im Zusammenhang mit der Fixierung des Profilmaterials am Rohrkörper genutzt werden. Für die Ausbildung der Nut, sowohl hinsichtlich Formgestaltung als auch hinsichtlich der Fertigungstechnik, gibt es in der Praxis vielfältige Möglichkeiten.

In einer Ausführungsform ist vorgesehen, dass die Nut in die betreffende Mantelfläche gefräst wird. Auch kann hierfür ein Einstechstahl oder dergleichen verwendet werden.

In einer Ausführungsform ist vorgesehen, dass die Nut im Wesentlichen in Umfangsrichtung des Rohrkörpers verlaufend ausgebildet wird.

Beispielsweise kann eine ringförmige (insbesondere ringförmig vollständig geschlossen) am Umfang des Rohrkörpers verlaufende Nut vorgesehen sein, welche am fertigen Dampfsieb dementsprechend mit einem ringförmig geschlossenen (oder nahezu geschlossenen) Profilmaterial versehen sein kann. Auf dieser Basis können über die axiale Länge des Rohrkörpers verteilt, insbesondere äquidistant verteilt, eine Vielzahl derartiger Ringnuten vorgesehen sein (mit einer entsprechenden Vielzahl von Profilmaterialringen am fertigen Dampfsieb).

In einer bevorzugten Ausführungsform ist vorgesehen, dass die Nut wendelförmig an der Mantelfläche des Rohrkörpers verlaufend ausgebildet (z. B. eingestochen) wird. Eine derartige Nut bzw. eine am fertigen Dampfsieb darin eingelegte Profilmaterialwendel entspricht im Wesentlichen der vorstehend erwähnten Vielzahl von Ringnuten bzw. Profilmaterialringen, ist jedoch im Hinblick auf den Fertigungsaufwand günstiger.

Die Profilmaterialwendel kann einstückig oder mehrstückig ausgebildet sein.

Eine besonders einfache Herstellung des Dampfsiebes ergibt sich zum Beispiel, wenn die Nut wendelförmig verlaufend in die Mantelfläche des Rohrkörpers eingestochen wird und ein Profildraht in die Nut eingelegt und einfach aufgewickelt wird. Hierbei kann, vor Beginn des eigentlichen Wickelvorganges, ein erstes Drahtende z. B. durch einen Schweißheftpunkt am Beginn der Nut fixiert werden.

Die Ganghöhe des Wendelverlaufs kann über einen Großteil der Axialerstreckung des Rohrkörpers im Wesentlichen konstant vorgesehen sein, um eine am fertigen Dampfsieb äquidistante Anordnung von Profilmaterialwindungen zu schaffen. Gemäß einer Weiterbildung einer derartigen gewendelt verlaufenden Nut ist vorgesehen, dass die Ganghöhe des Wendelverlaufes an wenigstens einem Axialende des Rohrkörpers abnimmt, insbesondere dass der Wendelverlauf an dieser Stelle in eine ringförmig geschlossene Nut übergeht.

Für die Gestaltung des Nutquerschnitts gibt es vielfältige Möglichkeiten. Der Querschnitt kann insbesondere etwa V-förmig oder etwa U-förmig ausgebildet sein, beispielsweise in Anpassung an den Querschnitt des verwendeten Profilmaterials (um einen guten Halt desselben in der Nut zu gewährleisten).

Für viele Anwendungsfälle günstig ist beispielsweise eine Nuttiefe im Bereich von etwa 10 % bis 60 % der Wandstärke des Rohrkörpers. Die radiale Ausdehnung des Profilmaterials kann z. B. kleiner oder gleich der Nuttiefe sein, ist bevorzugt jedoch gleich oder größer als die Nuttiefe.

Bei dem Profilmaterial handelt es sich gemäß einer Ausführungsform um ein Metallprofil, beispielsweise ein Stahlprofil (z. B. Stahldraht). Vorteilhaft sind derartige Materialien in großer Vielfalt kommerziell erhältlich oder können in einfacher Weise mit einem gewünschten Querschnittsprofil hergestellt werden.

In einer bevorzugten Ausführungsform besitzt das Profilmaterial einen abgerundeten Profilquerschnitt, der z. B. kreisrund, rechteckig mit abgerundeten Ecken, oval oder ähnlich ausgebildet sein kann.

In einer Ausführungsform besitzt das Profilmaterial einen Profilquerschnitt, der in einer Richtung langgestreckt ist, wobei diese Richtung am fertigen Dampfsieb bevorzugt die Radialrichtung darstellt. Dies ist z. B. in strömungstechnischer Hinsicht, etwa zur Verringerung des Strömungswiderstandes, zumeist günstig. Insbesondere in diesem Fall kann vorgesehen sein, dass das Profilmaterial in Radialrichtung aus der Nut herausragt (z. B. mit mindestens 30 % seiner in Radialrichtung vorhandenen Gesamtausdehnung).

In einer Ausführungsform ist vorgesehen, dass die Fixierung des Profilmaterials mittels einer Verschweißung bewerkstelligt wird. Beispielsweise kann das in die Nut eingefügte Material an mehreren Stellen punktverschweißt werden. Insbesondere bei einem längeren Profilmaterial, wie z. B. einer über den Großteil der axialen Länge des Rohrkörpers verlaufenden Profilmaterialwendel, ist eine punktuelle Fixierung, insbesondere Verschweißung, in unregelmäßigen oder regelmäßigen Abständen zweckmäßig. Alternativ kommt auch eine über die Länge des Profilmaterials durchgehende Fixierung in Betracht.

Das Dampfsieb kann z. B. als ein in Radialrichtung von innen nach außen von Dampf durchströmtes Sieb verwendet werden. Alternativ ist es möglich, das Dampfsieb als ein Sieb zu verwenden, welches in Radialrichtung von außen nach innen durchströmt wird.

Bei der Mantelfläche des Rohrkörpers, welche mit der oder den Nuten und dem Profilmaterial versehen wird, handelt es sich bevorzugt um die radial äußere Fläche des Rohrkörpermantels. Es soll jedoch keineswegs ausgeschlossen sein, dass alternativ oder zusätzlich hierfür die Innenfläche des Rohrkörpermantels verwendet wird.

Der Begriff "konisch" im Zusammenhang mit der Form der Siebfläche bzw. des bei der Herstellung des Dampfsiebes verwendeten Rohrkörpers umfasst im weitesten Sinne alle Rohrkörpergeometrien mit einem über die Länge des Rohrkörpers variierenden Durchmesser.

Die Erfindung wird nachfolgend anhand von Ausführungsbeispielen mit Bezug auf die beigefügten Zeichnungen weiter beschrieben. Es stellen dar:
- Fig. 1: ein zur Herstellung eines kreiszylindrischen Dampfsiebes verwendetes Rohr,
- Fig. 2: das Rohr von Fig. 1 nach Ausbildung einer Vielzahl von Aperturen sowie einer wendelförmig verlaufenden Nut in der äußeren Mantelfläche des Rohrs,
- Fig. 3: das bearbeitete Rohr von Fig. 2 nach Einfügung eines Profildrahts in die Nut und Fixierung desselben zur Ausbildung des Dampfsiebes,
- Fig. 4A: eine Querschnittsansicht entlang der Linie IV-IV in Fig. 3,
- Fig. 4B: eine der Fig. 4A entsprechende Querschnittsansicht gemäß eines modifizierten Ausführungsbeispiels,
- Fig. 4C: eine der Fig. 4A entsprechende Querschnittsansicht gemäß eines modifizierten Ausführungsbeispiels,
- Fig. 5: eine der Fig. 2 entsprechende Seitenansicht eines mit Aperturen versehenen Rohrkörpers zur Herstellung eines Dampfsiebes gemäß eines weiteren Ausführungsbeispiels, und
- Fig. 6: eine Querschnittsansicht entlang der Linie VI-VI in Fig. 5.

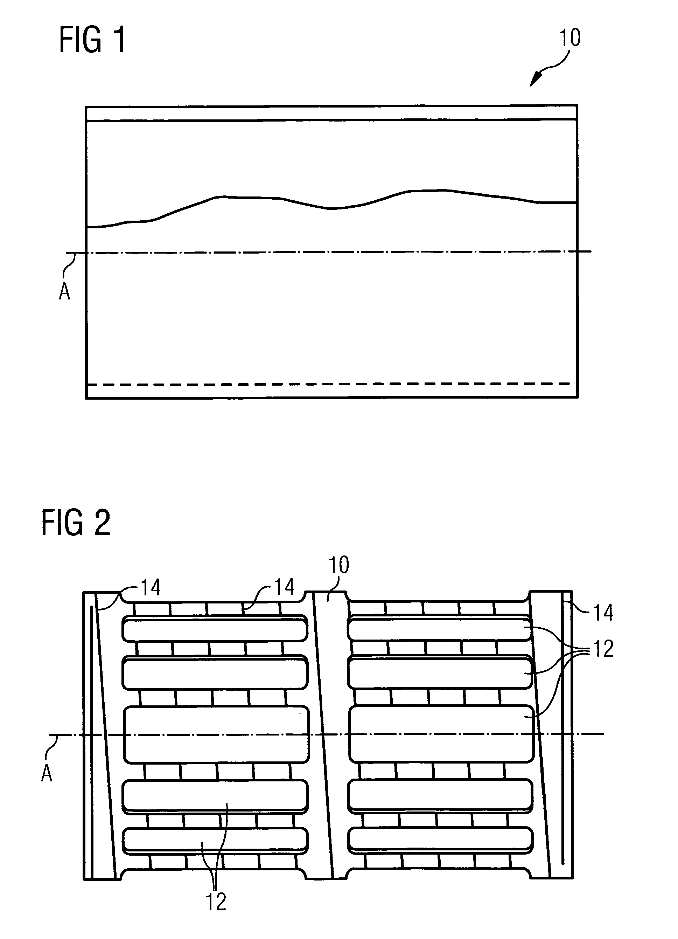

Die Fig. 1 bis 4A veranschaulichen ein erstes Ausführungsbeispiel der Erfindung.

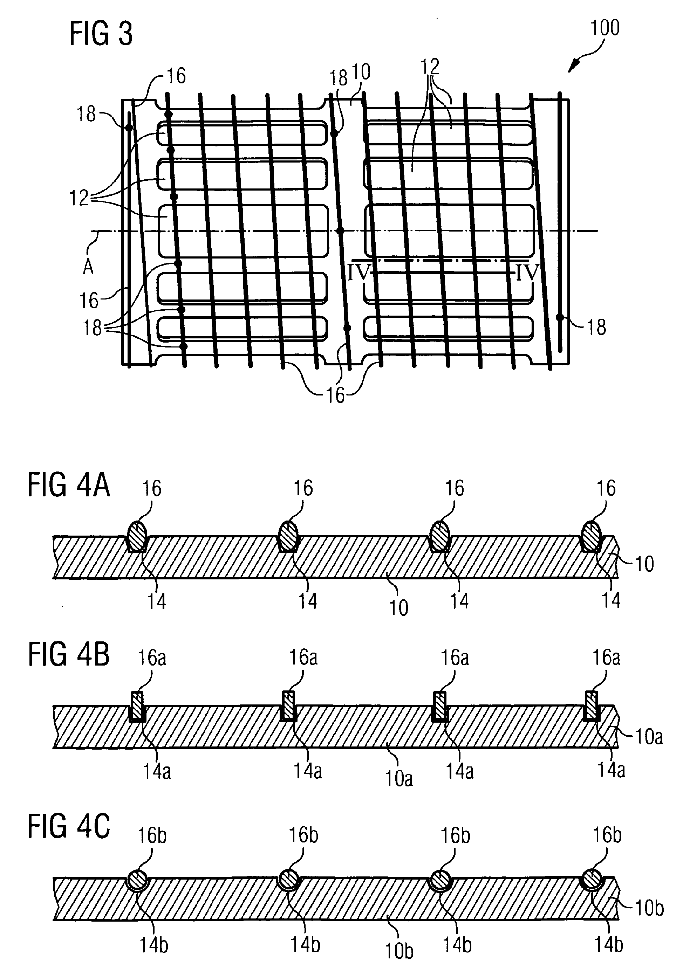

Fig. 1 zeigt ein zur Herstellung eines Dampfsiebes 100 (siehe Fig. 3) verwendetes Rohr 10. Im dargestellten Beispiel handelt es sich um ein Edelstahlrohr mit rotationssymmetrischer (hier: kreiszylindrischer) Form. Die Rohrachse bzw. Axialrichtung ist mit A bezeichnet.

Fig. 2 zeigt das Rohr 10, nachdem eine Vielzahl von Aperturen 12 sowie eine wendelförmig verlaufende Nut 14 in der äußeren Mantelfläche des Rohrs 10 ausgebildet wurden. Der Einfachheit der Dastellung halber ist in Fig. 2 nur der Verlauf der Nut 14 (und nicht deren Breite) eingezeichnet.

Die Aperturen 12 können beispielsweise aus dem Rohrmaterial herausgefräst werden. Prinzipiell kann die Nut 14 vor oder nach der Ausbildung der Aperturen 12 ausgebildet werden. Bevorzugt wird die Nut 14 vor der Ausbildung der Aperturen 12 ausgebildet, beispielsweise gefräst oder mittels eines Einstechstahls oder dgl. auf einer drehbankartigen Werkzeugmaschine. Am fertigen Werkstück gemäß Fig. 2 ist die Nut 14 in ihrem wendelförmigen Verlauf in den Bereichen der Aperturen 12 vielfach unterbrochen.

Fig. 3 zeigt schließlich das fertige Dampfsieb 100, welches aus dem Werkstück gemäß Fig. 2 erhalten wurde, nachdem ein Stahldraht 16, dem wendelförmigen Verlauf der Nut 14 folgend, in die Nut 14 eingelegt und in seiner Lage fixiert wurde. Im dargestellten Beispiel handelt es sich um einen nur teilweise in der Nut 14 versenkten Stahldraht 16 mit ovalem Querschnitt, wie es aus der vergrößerten Detailschnittansicht von Fig. 4A ersichtlich ist.

Die Fixierung des Drahtes 16 ist im dargestellten Beispiel mittels einer Reihe von Punktverschweißungen zwischen Drahtmaterial und Rohrmaterial realisiert. In Fig. 3 sind einige dieser Verschweißungspunkte symbolisiert und mit 18 bezeichnet.

Der Draht 16 wurde zunächst mit seinem Kopfende in einem axial außen liegenden (in Fig. 3 z. B. ganz links) Abschnitt der Nut 14 eingelegt und sogleich mit einem Schweißpunkt 18 fixiert (in Fig. 3 z. B. der ganz links oben mit 18 bezeichnete Schweißpunkt).

Danach wurde der Draht 16 wendelförmig auf das Rohr 10 (in die Nut 14) aufgewickelt. Am anderen axialen Ende des Rohrs 10 bzw. der Nut 14 (in Fig. 3 z. B. ganz rechts unten) wurde der Draht 16 sodann durch einen weiteren Schweißpunkt 18 fixiert (der in Fig. 3 ganz rechts unten mit 18 bezeichnete Schweißpunkt) und auf Länge geschnitten.

Zur Verbesserung der Fixierung des Drahtes 16 an der Mantelfläche des Rohrs 10 wurde der Draht 16 schließlich noch an einer Reihe von weiteren Punkten 18 fixiert (hier: angeschweißt), von denen in Fig. 3 beispielhaft nur ein Teil gezeigt ist. Prinzipiell steht der gesamte nicht von den Aperturen 12 beanspruchte Bereich der Mantelfläche für eine derartige Fixierung des Drahtes 16 zur Verfügung. Der Draht 16 überbrückt bzw. überquert an vielen Stellen die Aperturen 12. Um hierbei eine gute Fixierung des Drahtes 16 zu gewährleisten, bietet es sich an, den Draht 16 zumindest jeweils unmittelbar einem betreffenden Aperturrand benachbart zu fixieren. Im dargestellten Beispiel ist somit insbesondere an die in Fig. 3 in Axialrichtung A verlaufenden Stege zu denken, denen in Umfangsrichtung betrachtet beiderseits jeweils eine der Aperturen 12 benachbart ist.

Die Sieböffnungen des Dampfsiebes 100 sind diejenigen Freiräume innerhalb der Aperturen 12, die nach deren Überbrückung mit dem Drahtmaterial 16 noch verbleiben. Es ist klar, dass die Form und Anordnung der Sieböffnungen durch entsprechende Gestaltung der Aperturen 12 und des Nutenverlaufs bzw. Drahtverlaufs in weiten Grenzen gewählt und somit dem jeweiligen Anwendungsfall optimal angepasst werden können.

Beispielsweise können in einer Abwandlung des dargestellten Beispiels die einzelnen Sieböffnungen quadratisch ausgebildet werden, indem der lichte Abstand zwischen dem Drahtmaterial 16 gleich der Breite der Aperturen 12 gewählt wird und die Richtung der Längserstreckung der einzelnen Aperturen 12 etwas schräg zur Axialrichtung A gestellt wird (entsprechend dem Winkel zwischen dem Drahtverlauf und der exakten Umfangsrichtung).

Wenngleich somit die in Fig. 3 ersichtliche Form und Anordnung der einzelnen Sieböffnungen lediglich beispielhaft zu verstehen ist, so seien an diesem Beispiel einige vorteilhafte generelle Aspekte hervorgehoben:
a) Im Gegensatz zur Anordnung einer Vielzahl von Nuten und Anordnung mehrerer Profilmaterialabschnitte besitzt der einteilig-wendelförmige Nut- bzw. Drahtverlauf des Ausführungsbeispiels den Vorteil einer vereinfachten Fertigung. In diesem Zusammenhang ist anzumerken, dass die Ganghöhe des dargestellten Wendelverlaufs gleichzeitig eine (nämlich die axiale) Ausdehnung der einzelnen Sieböffnungen definiert. Möchte man diese axiale Ausdehnung kleiner oder größer als dargestellt vorsehen, so könnte z. B. in einfacher Weise eine kleinere bzw. größere Wendel-Ganghöhe vorgesehen werden, oder es könnten z. B. zwei Wendelverläufe (axial zueinander versetzt) vorgesehen werden, wodurch die axiale Ausdehnung der Sieböffnungen halbiert werden kann.
b) Vorteilhaft ist bei dem dargestellten Ausführungsbeispiel auch, dass die einzelnen Aperturen jeweils langgestreckt in einer bestimmten Richtung (hier: Axialrichtung A) verlaufen und quer dazu (hier: etwa in Umfangsrichtung) von äquidistant angeordneten Profilmaterialabschnitten überbrückt werden. Die Ausdehnungen der einzelnen Sieböffnungen in den beiden betreffenden Richtungen können unabhängig voneinander eingestellt werden, nämlich einerseits durch entsprechende Wahl der Breite der Aperturen und andererseits durch entsprechende Wahl des lichten Abstands des überbrückenden Profilmaterials. In diesem Zusammenhang ist anzumerken, dass abweichend von der dargestellten rechteckigen Aperturform insbesondere auch eine eher schlitzförmige Formgestaltung der Aperturen 12 in Betracht kommt, also mit einem wesentlich kleineren Breitezu-Länge-Verhältnis als bei dem dargestellten Beispiel.
c) Hinsichtlich der mechanischen Stabilität des Dampfsiebes ist es insbesondere für größere axiale Längen günstig, wenigstens einen Abschnitt dieser axialen Länge von Aperturen freizuhalten. In Fig. 3 ist ein solcher stabilisierender, ringförmig umlaufender Steg in der Mitte der Axialerstreckung ersichtlich. Insbesondere für kürzere Baulängen des Dampfsiebes kann auf einen oder mehrere solche Stabilisierungsstege jedoch auch verzichtet werden.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

Die Fig. 4B und 4C zeigen jeweils in einer der Fig. 4A entsprechende Schnittansicht zwei modifizierte Formgestaltungen für das zu verwendende Profilmaterial bzw. für die Gestaltung der zugehörigen Nuten.

In Fig. 4B ist beispielsweise ein rechteckiger Querschnitt eines Profilmaterials 16a dargestellt. Wie bei der in Fig. 4A dargestellten ovalen Querschnittsform können sich in strömungstechnischer Hinsicht Vorteile durch einen solchen langgestreckten Querschnitt ergeben, insbesondere wenn die Längsrichtung des Querschnitts wie dargestellt eine Radialrichtung am fertigen Dampfsieb bildet.

In Fig. 4C ist eine Gestaltung gezeigt, bei welcher das Profilmaterial 16b einen kreisrunden Querschnitt besitzt.

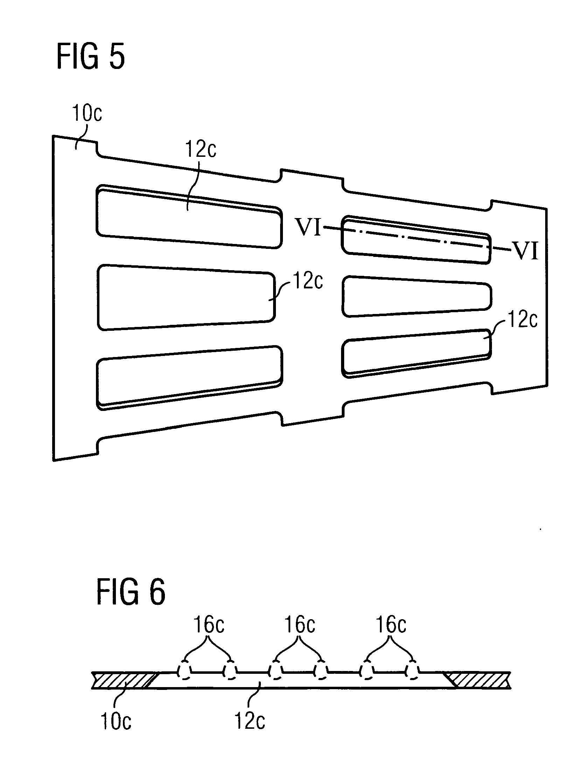

Die Fig. 5 und 6 veranschaulichen ein weiteres Ausführungsbeispiel der Erfindung.

Fig. 5 zeigt ein kegelstumpfförmiges Rohr 10c mit bereits darin ausgebildeten Aperturen 12c.

Daraus kann wie oben für das erste Ausführungsbeispiel bereits ausführlich beschrieben ein Dampfsieb hergestellt werden, indem an einer Mantelfläche des Rohrs 10c noch eine oder mehrere Nuten ausgebildet werden und ein Profilmaterial in die Nut(en) eingefügt und fixiert wird.

Fig. 6 ist eine Querschnittsansicht längs der Linie VI-VI in Fig. 5, wobei zusätzlich eine mögliche Anordnung des Profilmaterials 16c (gestrichelt) eingezeichnet ist. Damit ist beispielhaft ein etwa tropfenförmiger Querschnitt des Profilmaterials 16c (z. B. Metallprofil) veranschaulicht, mit dem ein besonders niedriger Strömungswiderstand erzielbar ist.

Außerdem ist aus Fig. 6 eine weitere optionale, strömungstechnisch vorteilhafte Maßnahme ersichtlich, nämlich dass die Apertur 12c einen durch das Rohrmaterial 10c hindurch verlaufenden Rand besitzt, der sich nicht geradlinig in Radialrichtung erstreckt. Im dargestellten Beispiel erstreckt sich dieser Rand z. B. schräg bezüglich der Radialrichtung. Alternativ oder zusätzlich können an dieser Stelle auch Abfassungen und/oder Abrundungen vorgesehen werden.

## Patentansprüche

1. Verwendung eines Siebes (100), umfassend einen zylindrischen oder konischen Rohrkörper (10) mit wenigstens einer Apertur (12) sowie wenigstens einer, in ihrem Verlauf durch die Apertur (12) unterbrochenen Nut (14) in einer Mantelfläche des Rohrkörpers (10), und ein in die Nut (14) eingefügtes und am Rohrkörper (10) fixiertes Profilmaterial (16), **dadurch gekennzeichnet, dass** das Sieb (100) als ein Dampfsieb für eine Dampfturbinenanlage verwendet wird.

2. Verwendung nach Anspruch 1, wobei die Apertur (12) mit einer langgestreckten Kontur, insbesondere in Axialrichtung (A) des Rohrkörpers (10) langgestreckten Kontur, ausgebildet ist.

3. Verwendung nach einem der vorangehenden Ansprüche, wobei die Apertur (12) mehrere Nutverläufe (14) unterbricht.

4. Verwendung nach einem der vorangehenden Ansprüche, wobei die Nut (14) im Wesentlichen in Umfangsrichtung des Rohrkörpers (10) verlaufend ausgebildet ist.

5. Verwendung nach einem der vorangehenden Ansprüche, wobei die Nut (14) wendelförmig an der Mantelfläche des Rohrkörpers (10) verlaufend ausgebildet ist.

6. Verwendung nach einem der vorangehenden Ansprüche, wobei das Profilmaterial (16) einen abgerundeten Profilquerschnitt besitzt.

7. Verwendung nach einem der vorangehenden Ansprüche, wobei die Fixierung mittels einer Verschweißung bewerkstelligt ist.

8. Dampfturbinenanlage mit einem in einer Zudampfleitung vorgesehenen Dampfsieb (100), umfassend einen zylindrischen oder konischen Rohrkörper (10) mit wenigstens einer Apertur (12) sowie wenigstens einer, in ihrem Verlauf durch die Apertur (12) unterbrochenen Nut (14) in einer Mantelfläche des Rohrkörpers (10), und ein in die Nut (14) eingefügtes und am Rohrkörper (10) fixiertes Profilmaterial (16).

## Claims

1. Use of a screen (100), comprising a cylindrical or conical tube body (10) with at least one aperture (12) as well as at least one groove (14), the course of which is interrupted by the aperture (12), in a lateral surface of the tube body (10), and a profile material (16) inserted into the groove (14) and fixed to the tube body (10), **characterised in that** the screen (100) is used as a steam screen for a steam turbine plant.

2. Use according to claim 1, the aperture (12) being configured with a longitudinally extended contour, in particular a longitudinally extended contour in the axial direction (A) of the tube body (10).

3. Use according to one of the preceding claims, the aperture (12) interrupting a number of groove courses (14).

4. Use according to one of the preceding claims, the groove (14) being configured so that it runs essentially in the peripheral direction of the tube body (10).

5. Use according to one of the preceding claims, the groove (14) being configured so that it runs in the manner of a coil on the lateral surface of the tube body (10).

6. Use according to one of the preceding claims, the profile material (16) having a rounded profile cross section.

7. Use according to one of the preceding claims, the fixing being brought about by means of a welding operation.

8. Steam turbine plant with a steam screen (100) provided in a steam supply line, comprising a cylindrical or conical tube body (10) with at least one aperture (12) as well as at least one groove (14), the course of which is interrupted by the aperture (12), in a lateral surface of the tube body (10), and a profile material (16) inserted into the groove (14) and fixed to the tube body (10.

## Revendications

1. Utilisation d'un filtre (100), comprenant un corps tubulaire cylindrique ou conique (10) avec au moins une ouverture (12) ainsi qu'au moins une rainure (14) interrompue dans sa trajectoire par l'ouverture (12) dans une surface enveloppe du corps tubulaire (10), et un matériau profilé (16) inséré dans la rainure (14) et fixé au niveau du corps tubulaire (10), **caractérisée en ce que** le filtre (100) est utilisé en tant que filtre à vapeur pour une installation à turbine à vapeur.

2. Utilisation selon la revendication 1, dans laquelle l'ouverture (12) est configurée avec un contour allongé, en particulier un contour allongé dans la direction axiale (A) du corps tubulaire (10).

3. Utilisation selon l'une des revendications précédentes, dans laquelle l'ouverture (12) interrompt plusieurs trajectoires de rainure (14).

4. Utilisation selon l'une des revendications précédentes, dans laquelle la rainure (14) est configurée pour l'essentiel s'étendant dans la direction périphérique du corps tubulaire (10).

5. Utilisation selon l'une des revendications précédentes, dans laquelle la rainure (14) est configurée s'étendant de manière hélicoïdale au niveau de la surface enveloppe du corps tubulaire (10).

6. Utilisation selon l'une des revendications précédentes, dans laquelle le matériau profilé (16) possède une section transversale profilée arrondie.

7. Utilisation selon l'une des revendications précédentes, dans laquelle la fixation est réussie au moyen d'une soudure.

8. Installation à turbine à vapeur avec un filtre à vapeur (100) prévu dans une conduite d'alimentation en vapeur, comprenant un corps tubulaire cylindrique ou conique (10) avec au moins une ouverture (12) ainsi qu'au moins une rainure (14) interrompue dans sa trajectoire par l'ouverture (12) dans une surface enveloppe du corps tubulaire (10), et un matériau profilé (16) inséré dans la rainure (14) et fixé au niveau du corps tubulaire (10).
